Europäisches Patentamt

(19) European Patent Office

Office européen des brevets

(11) Veröffentlichungsnummer: **0 038 376**
**B1**

(12) # EUROPÄISCHE PATENTSCHRIFT

(45) Veröffentlichungstag der Patentschrift:
**27.12.84**

(51) Int. Cl.³: **H 01 R 31/00, H 02 J 5/00**

(21) Anmeldenummer: **80105621.9**

(22) Anmeldetag: **19.09.80**

(54) **Batteriebetriebenes Elektro-Handgerät.**

(30) Priorität: **21.04.80 DE 3015248**

(43) Veröffentlichungstag der Anmeldung:
**28.10.81 Patentblatt 81/43**

(45) Bekanntmachung des Hinweises auf die Patenterteilung:
**27.12.84 Patentblatt 84/52**

(84) Benannte Vertragsstaaten:
**AT BE CH DE FR GB LI NL SE**

(56) Entgegenhaltungen:
**DE - C - 1 093 839**
**US - A - 3 109 132**
**US - A - 3 120 632**

(73) Patentinhaber: **Heinrich Kopp GmbH & Co. KG,**
**Alzenauer Strasse 68-70 (Postfach 60),**
**D-8756 Kahl/Main (DE)**

(72) Erfinder: **Lott, Oswald, Fichtestrasse 10,**
**D-6467 Hasselroth 1 (DE)**
Erfinder: **Will, Elmar H., Makartstrasse 9,**
**D-8000 München 71 (DE)**

(74) Vertreter: **Beckmann, Gerhard, Röntgenweg 1,**
**D-5880 Lüdenscheid/Westf. (DE)**

**Beschreibung**

Die Erfindung betrifft ein batteriebetriebenes Elektro-Handgerät gemäss Oberbegriff des Anspruches 1.

Es sind bereits Hand- oder Taschenleuchten mit einem ansteckbaren Stromversorgungsteil versehen worden, der sich in abgezogenem Zustand zur Wiederaufladung einfach in eine Netzsteckdose einführen lässt (DE-U-7 615 360). Ausserdem hat man, um derartige Gebrauchsgegenstände bei Bedarf und fehlendem Netzanschluss aus einer Autobatterie nachladen zu können, die Leuchte hierzu rückseitig mit einem speziellen Autostecker versehen, mit dem sich diese nach Abziehen einer Schutzkappe in die regelmässig für den Zigarrenanzünder vorhandene Autosteckdose einsetzen lässt (DE-U-6 920 231). Des weiteren ist auch schon vorgeschlagen worden, die als solche nur aus der Autobatterie nachladbare Leuchte durch Verwendung eines besonderen Ladegeräts hilfsweise aus dem Wechselstromnetz nachladen zu können (DE-A-2 159 202). Umgekehrt lässt sich eine andere, nach Abnehmen der Schutzkappe aus dem Wechselstromnetz nachladbare Leuchte bei einer entsprechend ausgelegten Ladeschaltung durch einen gesonderten Zusatzstecker auch aus der Autobatterie nachladen (US-A-3 109 132).

Darüber hinaus zeigt ein nachrichtentechnisches Gerät mit einem Stromverbraucher und einem aus Batterie und Ladeeinrichtung bestehenden Stromversorgungsteil die Möglichkeit, einen Leuchtkopf, einen Rundfunkempfänger und ein Stromversorgungsteil jeweils in zusammensteckbaren Gehäuseteilen unterzubringen. Hierbei ist jedoch ebenfalls ein besonderes Verbindungsstück erforderlich, um das Gerät bzw. dessen Stromversorgungsteil für sich gegebenenfalls auch aus einer Autobatterie nachladen zu können (DE-C-1 093 839).

Derartige Ausführungen haben unabhängig von der Funktion des damit betriebenen Elektrogeräts den Nachteil, entweder nur für eine bestimmte Ladeart ausgelegt zu sein, oder aber für die andere Lademöglichkeit ein separates Zusatzgerät zu benötigen, das dann im Bedarfsfall häufig nicht zur Hand ist, leicht verlegt wird oder sogar verlorengeht. Um diesen Umständen abzuhelfen, liegt der Erfindung die Aufgabe zugrunde, ein beliebiges Elektro-Handgerät derart auszubilden, dass der in dessen Gehäuse enthaltene Sammler wahlweise und ohne Zusatzeinrichtungen sowohl aus dem Wechselstromnetz als auch aus der Autobatterie aufgeladen werden kann.

Diese Aufgabe wird bei einem batteriebetriebenen Handgerät nach dem Oberbegriff des Patentanspruchs 1 gemäss der Erfindung durch die in dessen Kennzeichnungsteil enthaltenen Merkmale gelöst. Dementsprechend setzt sich das betreffende Handgerät als Leuchte usw. grundsätzlich aus dem jeweiligen Funktionsteil und dem mit Netz- wie Batterieladeeinrichtung versehenen Stromversorgungsteil zusammen, die beide über ein geräteeigenes bzw. vollintegriertes Zwischenglied gebrauchsfertig zusammensteckbar sind. Dabei gewährleistet dieses Zwischenglied im Gebrauchszustand die Stromversorgung des Funktionsteils aus dem geräteeigenen Sammler und im abgezogenen Zustand zusammengesteckt mit dem Stromversorgungsteil dessen Auflademöglichkeit aus der Autosteckdose, wogegen der weiterhin von dem Zwischenglied abgezogene Stromversorgungsteil für sich allein aus einer Netzsteckdose nachladbar ist.

Die Ausgestaltung dieser erfindungswesentlichen Elemente und deren vorteilhafte Weiterbildung ergibt sich aus den Unteransprüchen.

Im unmittelbaren Bereich der Erfindung liegt natürlich auch die Ausführung, den Stromversorgungsteil des batteriebetriebenen Handgeräts und dessen Zwischenglied kompakt miteinander verbunden zu einem Geräteteil zusammenzufassen, um diesen mit einem der vorgesehenen «Ladestecker» in den Funktionsteil einstecken zu können. Hierbei beinhaltet dieser Geräteteil in sich den NC-Sammler sowie die Ladeeinrichtung und ist gemäss den Merkmalen der Ansprüche 6 und 7 entweder auf der Einsteckseite mit dem zusätzlich über einen Kopfkontakt verfügenden Autostecker und auf der Rückseite mit dem normalen Netz(flach-)stecker versehen, oder umgekehrt. Im umgekehrten Fall enthält der Geräteteil auf der Einsteckseite zwischen den beiden Steckerstiften des Flachsteckers eine mit Sammler und Ladeeinrichtung verbundene Einsteckbuchse, in die von Seiten des Funktionsteils her ein zweipoliger Steckstift eingreift, während hier der Autostecker keinen Kopfkontakt zu besitzen braucht. In beiden Fällen empfiehlt sich jedoch aus Sicherheitsgründen eine Schutztrennung zwischen den beiderseitigen Steckvorrichtungen, die sich relativ einfach durch schaltungstechnische Massnahmen, wie Trenntransformator od.dgl., erreichen lässt. Auf diese Weise ist ohne besonderen Mehraufwand auch ein aus nur zwei Bestandteilen gebildetes Handgerät zu verwirklichen, welches dann allerdings auf seiner Rückseite mittels einer besonderen Abdeckkappe verschlossen bzw. der Ausführung des Autosteckers nach geeignet ausgestaltet werden muss.

Als typisches Ausführungsbeispiel der Erfindung ist in der anliegenden Zeichnung ein Elektro-Handgerät in Form einer Handleuchte oder Taschenlampe dargestellt. Hierbei zeigt:

Fig. 1 die Seitenansicht von Funktionsteil, Zwischenglied und Stromversorgungsteil im getrennten Zustand;

Fig. 2 eine im Bereich des Stromversorgungsteils geschnittene Draufsicht der gebrauchsfertigen Leuchte;

Fig. 3 einen Längsschnitt der Leuchte gemäss Fig. 2 in vereinfachter Darstellung;

Fig. 4 den Stromlaufplan für die elektrischen Einrichtungen der gesamten Leuchte; und

Fig. 5 die Verteilung dieser elektrischen Einrichtung auf die drei einzelnen Teile der Leuchte.

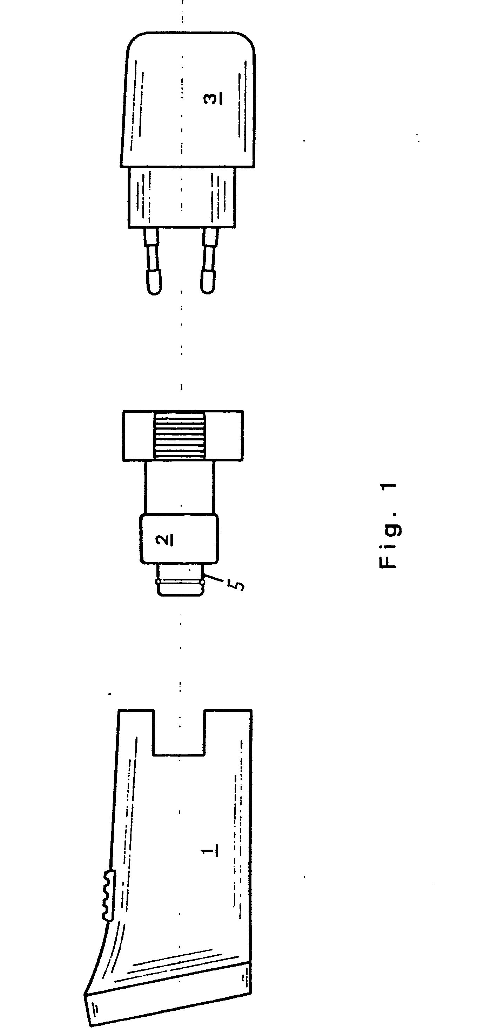

Gliederung und Aufbau der Leuchte sind am deutlichsten aus Fig. 1 der Zeichnung ersichtlich. Danach setzt sich dieses Handgerät im einzelnen aus dem die Glühlampe samt Reflektor und einen beliebigen Schalter enthaltenden Funktionsteil 1, aus dem nach beiden Seiten hin als Steck- bzw. Einsteckanordnung wirkenden Zwischenglied 2 und aus dem den NC-Sammler sowie die speziellen Ladeeinrichtungen beinhaltenden Stromversorgungsteil 3 zusammen.

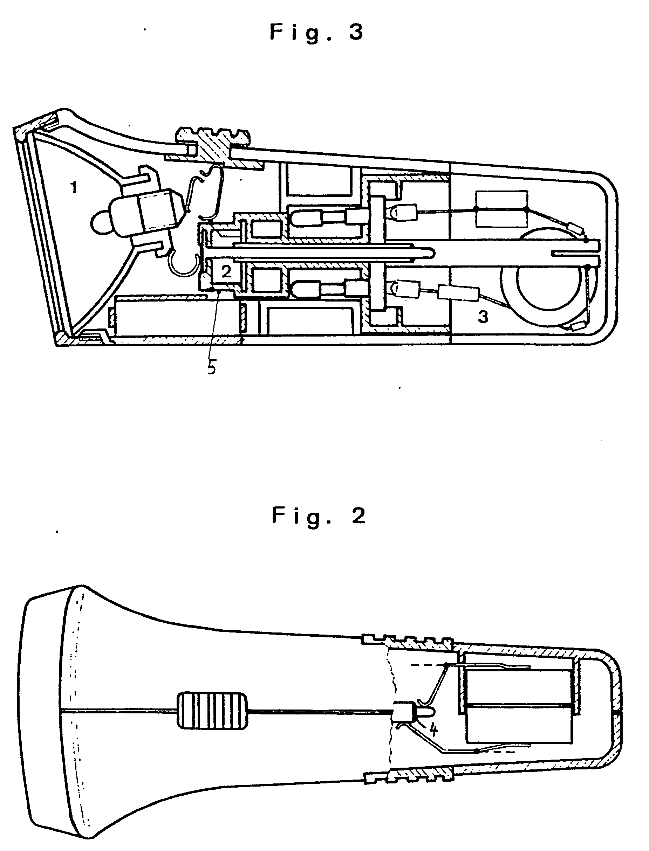

Diese drei Teilelemente sind gemäss der Darstellung in Fig. 2 zu einem gebrauchsfertigen Gerät in- und aneinandersteckbar, wobei das Zusammenwirken des Stromversorgungsteils 3 und des Funktionsteils 1 vermittels des auf den Teil 3 und zusammen mit diesem in den Teil 1 eingesteckten Zwischengliedes 2 schematisch aus Fig. 3 der Zeichnung hervorgeht.

Gemäss dieser Darstellung ist das Zwischenglied 2 an seiner Rückseite mit einer profilierten Einsecköffnung für die Aufnahme des Flachsteckers von Seiten des Stromversorgungsteils 3 her versehen, während ihm an seiner Vorderseite, und zwar aussermittig (nach unten) versetzt, der sog. Autostecker (5) angeformt ist. Dieser Autostecker 5 wird zentral von einer 2-poligen Leitungsführung durchdrungen, die im Bereich der Einstecköffnung als Koaxialstecker 4 ausgebildet ist, um durch eine Bohrung zwischen den beiden Steckerstiften des Flachsteckers und entsprechend innengelegene Klinkenkontakte in leitende Verbindung mit dem NC-Sammler und der Schaltungsanordnung des Stromversorgungsteils 3 zu gelangen. Auf der Vorderseite des Autosteckers endet diese Leitungsführung in einem Kopfkontakt desselben und an dem ringförmigen Aussenkontakt, mit denen innerhalb des Funktionsteils 1 über dessen federnde Gegenkontaktglieder einmal direkt und zum anderen unter Einbeziehung des von aussen verstellbaren Schiebeschalters die elektrische Verbindung zu der frontseitig inmitten einer Reflektorabdeckung der Handleuchte angeordneten Glühlampe(-nfassung) hergestellt wird. Insofern lässt sich die Glühlampe – wie natürlich auch ein andersartiges Funktionselement im Sinne der Erfindung – im gebrauchsfertig zusammengesteckten Zustand des Geräts bei entsprechender Schalterbetätigung über das voll im Gehäuse integrierte Zwischenglied 2 aus dem NC-Sammler des Stromversorgungsteils 3 speisen bzw. betreiben.

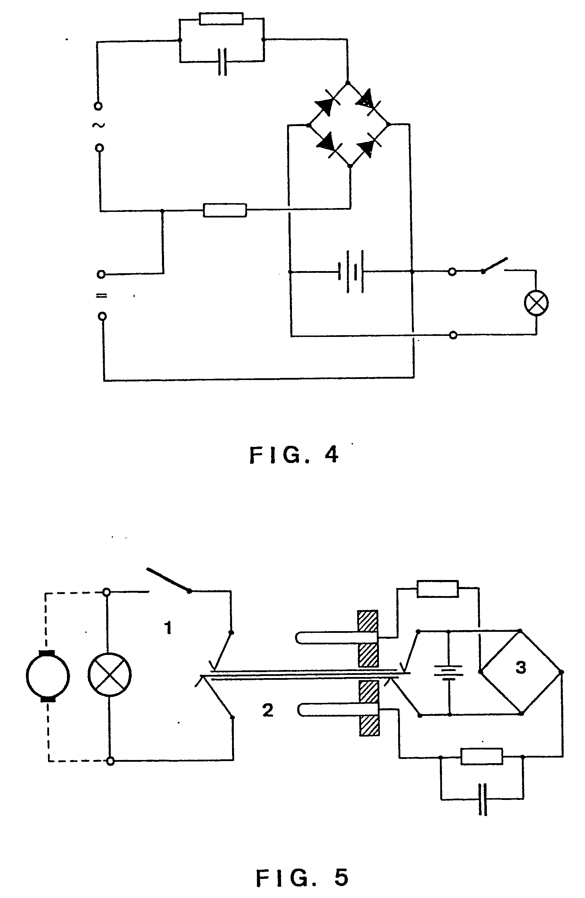

Um den NC-Sammler des Geräts im Bedarfsfall aus dem Wechselstromnetz wiederaufladen zu können, braucht lediglich der Stromversorgungsteil 3 von den übrigen Teilen (1 und 2) abgezogen zu werden, um ihn mit seinem Flachstecker in eine der üblichen Netzsteckdosen einzustecken. Wie aus dem Stromlaufplan nach Fig. 4 ersichtlich ist, wird dabei der durch ein RC-Glied entsprechend herabgesetzte Einphasenwechselstrom über eine Gleichrichteranordnung in Brückenschaltung direkt dem aufzu-ladenen NC-Sammler zugeführt, wobei dem weiterhin eingezeichneten Vorwiderstand in diesem Fall nur eine den bereits vorhandenen Widerstand geringfügig auf die volle Höhe ergänzende Bedeutung zukommt.

Soll der NC-Sammler dagegen aus einer Autobatterie aufgeladen werden, so ist hierzu erforderlich, den Stromversorgungsteil 3 zusammen mit dem Zwischenglied 2 aus dem Funktionsteil 1 herauszuziehen. In dieser Gestalt fungiert das Zwischenglied 2 gleichsam als Adapter, mit dessen Hilfe sich der Stromversorgungsteil 3 in die fast durchweg bei Kraftfahrzeugen für den Zigarrenanzünder vorhandene Autosteckdose einstöpseln lässt. Dabei gelangen der ringförmige Aussenkontakt an der Stirnseite des Autosteckers sowie der dazu vor dessen Griffansätzen nach aussen hin freiliegende Steckerstift des Stromversorgungsteils 3 in leitende Berührung mit den entsprechenden Topfkontakten der Autosteckdose und verbinden gemäss der Darstellung in Fig. 4 der Zeichnung den NC-Sammler über den entsprechend dimensionierten Vorwiderstand und einen Brückenzweig der Gleichrichteranordnung mit der 6 V- oder der 12 V-Batterie des Kraftfahrzeugs. In diesem Zusammenhang wird die zutreffende Polung des angesteckten Stromversorgungsteils 3 durch die Formgebung des gemeinsamen Gehäuses oder durch eine mit dem Zwischenglied 2 dem Profil nach korrespondierende Vertauschsperre sichergestellt.

Wie aus diesen Darlegungen ohne weiteres hervorgeht, beschränkt sich die Ausführung des erfindungsgemässen Handgeräts keineswegs auf die hier nur als Beispiel herausgegriffene Ausbildung in Form einer Hand- oder Taschenleuchte. So kann z. B. der Funktionsteil 1 des Gerätes in geeigneter Ausgestaltung auch als elektromotorisch betriebenes Gebläse für das Anfachen von Grill- oder Kaminfeuerungen, als Elektro-Trockenrasierer, oder als Hochspannungs-Blitzlichtgerät u. dgl. ausgeführt werden, ohne dadurch von dem grundsätzlichen Erfindungsgedanken abzuweichen. Darüber hinaus besteht sogar die Möglichkeit, den Funktionsteil 1 anstelle eines bestimmten Geräts auf ein elektro-mechanisches Kopplungselement zu beschränken, mit welchem sich die der Art nach verschiedenen Funktionsaufsätze auswechselbar kombinieren lassen, um auf diese Weise zu einem allerorts brauchbaren Universalgerät zu gelangen.

Des weiteren bietet sich gemäss der Erfindung an, das Zwischenglied 2 und den Stromversorgungsteil 3 entsprechend der Darstellung in Fig. 1 zu einem gemeinsamen Geräteteil ($^2/_3$) zusammenzufassen, auf dessen einer Seite der Autostecker und auf der anderen Seite der Netz(flach-)stecker angeordnet sind, ohne dass es hierzu einer besonderen Zeichnung bedarf. Je nachdem, ob dieser Geräteteil ($^2/_3$) dann über den Autostecker oder über den Flachstecker mit dem Funktionsteil 1 zusammensteckbar ausgeführt sein soll, ist es erforderlich, entweder den normalen Autostecker gemäss der Darstellung in den Fig. 3 und 5 mit einem zusätzlichen Kopfkontakt auszurüsten und den Flachstecker unverändert zu belassen, oder aber den Flachstecker zwischen seinen Steckerstiften zusätzlich mit einer 2-poligen Klinkensteckbuchse zu versehen, in die von Seiten des Funktionsteils 1 her ein Koaxialstecker eingreift, um die Glühlampenanordnung der Leuchte mit dem NC-Sammler des Geräteteils ($^2/_3$)

zu verbinden, wogegen bei dieser Ausführung der Autostecker keinen Kopfkontakt benötigt. Darüber hinaus bedarf die Massnahme zur Absicherung des Geräteteils (²/₃) im Wege einer geeigneten Schutztrennung von Auto- und Netzstecker, sowie deren formgerechte Einbeziehung in das Leuchtengehäuse vermittels einer Abdeckkappe od.dgl., an dieser Stelle keiner besonderen Hinweise.

## Patentansprüche

1. Batteriebetriebenes Elektro-Handgerät, wie Leuchte, Gebläse, Trockenrasierer u.dgl., bestehend aus einem Funktionsteil (1) und einem damit steckbaren, formschlüssig und elektrisch leitend verbundenen Stromversorgungsteil (3), welches einen Akkumulator enthält, der über eine in das Stromversorgungsteil (3) eingebaute Ladeeinrichtung und über einen an das Stromversorgungsteil (3) angeformten Netzstecker aus dem Wechselstromnetz oder aus einer Autobatterie aufladbar ist, dadurch gekennzeichnet, dass ein in das Gehäuse des Geräts einbezogener, den elektrischen Funktionsteil (1) mit seinem Stromversorgungsteil (3) steckbar verbindendes Zwischenglied (2) vorgesehen ist, welches an seiner Vorderseite mit einem die Stromversorgungskontakte des Funktionsteils (1) kontaktierenden Autostecker (5) versehen ist, und dass das Zwischenglied (2) auf seiner Rückseite innerhalb einer Einsecköffnung für den Netz(flach-)stecker des Stromversorgungsteils (3) einen zweipoligen Steckstift (4) zur Verbindung der Autosteckerkontakte mit der versorgungsteilseitigen Batterie- und Netzladeeinrichtung des Akkumulators aufweist.

2. Elektro-Handgerät nach Anspruch 1, dadurch gekennzeichnet, dass das formschlüssig in den Funktionsteil (1) einsteckbare Zwischenglied (2) an den sich gegenüberliegenden Aussenseiten mittels Griffansätzen in entsprechende Wandungsausnehmungen des Funktionsteils (1) eingreift.

3. Elektro-Handgerät nach einem der Ansprüche 1 und 2, dadurch gekennzeichnet, dass die Einsecköffnung des Zwischengliedes (2) an dessen Rückseite dem Profil des Flachsteckers des Stromversorgungsteils (3) entspricht und der Autostecker (5) des Zwischengliedes (2) an dessen Vorderseite aussermittig versetzt angeformt ist.

4. Elektro-Handgerät nach einem der Ansprüche 1 bis 3, dadurch gekennzeichnet, dass der Funktionsteil (1) als elektrischer Verbraucher, wie Leuchte, Gebläse, Rasierer u.dgl., ausgebildet ist, oder an sich selbst über eine mechanisch-elektrische Kopplungsvorkehrung für dementsprechende Geräteaufsätze verfügt.

5. Elektro-Handgerät nach Anspruch 1, dadurch gekennzeichnet, dass das Stromversorgungsteil (3) und das Zwischenglied (2) steckbar-verrastend zu einem den Akkumulator sowie die Ladeeinrichtung enthaltenden, in den Funktionsteil (1) einsteckbaren Geräteteil (2, 3) verbunden sind, auf dessen Einsteckseite der zusätzlich mit einem Kopfkontakt versehene Autostecker (5) und auf dessen Rückseite der durch eine Verschlusskappe abdeckbare Flachstecker angeordnet ist.

6. Elektro-Handgerät nach einem der Ansprüche 1 und 5, dadurch gekennzeichnet, dass auf der Einsteckseite des aus dem Stromversorgungsteil (3) und dem Zwischenglied (2) zusammensteckbar-verrastend ausgebildeten Geräteteils (2, 3) zwischen den Steckerstiften des Flachsteckers eine mit einem zweipoligen Steckstift auf Seiten des Funktionsteils (1) zusammenwirkende Einsteckbuchse, und auf der Rückseite des Geräteteils (2, 3) der gegebenenfalls durch eine Verschlusskappe abdeckbare Autostecker (5) angeordnet ist.

## Claims

1. Battery-operated electric hand appliances (like lights, blowers, dry razors etc.) consisting of a functional part (1) and its plug-in, interlocking, electroconductive power supply unit (3), which contains an accumulator that is rechargeable, using the AC mains supply system or a car battery, by means of a charging device built into the power supply unit (3) and by means of of a power plug designed to fit the power supply unit (3), and characterized by the presence of a plug-in connecting adaptor (2), which is built into the appliance's housing, is designed to connect the electric functional part (1) to its power supply unit (3) and is equipped on its front side with a car plug (5) contacting the power supply contacts of the functional part (1), and also characterized by the presence of a two-pole socket (4), which is located on the back side of the connecting adaptor (2) within a plug opening for the (flat) power plug of the power supply unit (3) and is used to connect the car plug contacts to the power-supplying equipment of the accumulator's battery and charger.

2. An electric hand appliance as in claim 1 characterized in that the plug-in connecting adaptor (2), interlockable with the functional part (1), catches on the opposite outer wall by means of the catch projections found on the corresponding side-wall recess of the functional part (1).

3. An electric hand appliance as in claims 1 and 2 characterized in that the socket opening on the electric adaptor's (2) reverse side corresponds to the profile of the flat plug of the power supply unit (3) and in that the connecting adaptor (2) has its car plug (5) located eccentrically on its front side.

4. An electric hand appliance as in claims 1 to 3 characterized functional part (1) is built to be an electrical consumer (like lights, blowers, razors etc.) or has its own built-in mechanical-electrical coupler for corresponding appliance adaptors.

5. An electric hand appliance as in claim 1 characterized in that the power supply unit (3) and the connecting adaptor (2) are connected with plug-in and catch by an appliance part (2, 3) (contained in the accumulator and charging equipment) that can be plugged into the functional part (1) and whose plugin side contains the car plug (5) (equipped additionally with a head contact) and on the reverse side the flat plug (coverable with a sealing cap).

6. An electric hand appliance as in claims 1 and 5 characterized in that a two-pole plug-pin socket is located between the flat plug's pins on the plug-in side of the appliance part (2, 3), which is formed by the plug-and-catch interlock of the power supply unit (3) and the connecting adaptor (2); and distinguished in that a car plug (5), which eventually can be covered with a cap, is located on the reverse side of the appliance part (2, 3).

**Revendications**

1. Appareil électrique manuel alimenté par batterie, comme lampe, ventilateur, rasoir électrique etc., composé d'une unité fonctionnelle (1) et une unité d'alimentation en courant enfichable raccordée de façon mécanique et conductible (3) comprenant un accumulateur qui peut être rechargé du secteur à courant alternatif ou d'un accumulateur de voiture par l'intermédiaire d'un dispositif de charge intégré dans l'unité d'alimentation en courant (3) et d'une fiche secteur adaptée à l'unité d'alimentation en courant caractérisé en ce qu'un membre intermédiaire (2) intégré dans le châssis de l'appareil et raccordant l'unité fonctionnelle (1) à l'unité d'alimentation en courant (3) de façon enfichable est prévu qui est équipé d'une fiche de voiture (5) au côté avant servant à établir le contact aux contacts d'alimentation en courant de l'unité fonctionnelle et en ce que le membre intermédiaire (2) dispose d'un contact à fiche bipolaire (4) au côté arrière à l'intérieur d'une ouverture à insérer pour la fiche secteur (fiche plate) de l'unité d'alimentation en courant (3) qui sert à la connexion des contacts de fiche de voiture du dispositif de charge de la batterie et du secteur d'un accumulateur se trouvant au côté de l'unité d'alimentation en courant.

2. Appareil électrique manuel selon la revendication 1, caractérisé en ce que le membre intermédiaire (2) enfichable de façon mécanique dans l'unité fonctionnelle (1) engrène dans des évidements de paroi correspondants de l'unité fonctionnelle (1) aux côtés extérieurs opposés par moyen de talons d'emmanchement.

3. Appareil électrique manuel selon une des revendications 1 et 2, caractérisé en ce que l'ouverture femelle du membre intermédiaire (2) correspond au côté arrière au profil de la fiche plate de l'unité d'alimentation en courant (3) et en ce que la fiche de voiture (5) du membre intermédiaire (2) est adaptée de façon excentrique.

4. Appareil électrique manuel selon une des revendications 1 à 4, caractérisé en ce que l'unité fonctionnelle (1) est réalisée comme utilisateur électrique, comme lampe, ventilateur, rasoir électrique, etc. ou en ce qu'il dispose d'un dispositif de couplage mécano-électrique pour des assemblages d'appareils correspondants.

5. Appareil électrique manuel selon la revendication 1, caractérisé en ce que le dispositif d'alimentation en courant (1) et le membre intermédiaire (2) sont raccordés de manière à former une unité d'appareils enfichable (2, 3) dans l'unité fonctionnelle contenant l'accumulateur ainsi que le dispositif de charge. Au côté enfichable de ladite unité d'appareils enfichable se trouve la fiche de voiture (5) additionnellement équipée d'un contact de tête et au côté arriére de cette unité se trouve la fiche plate qui peut être couverte d'un capuchon.

6. Appareil électrique manuel selon une des revendications 1 et 5, caractérisé en ce qu'une douille femelle concourant aux côtés de l'unité fonctionnelle (1) avec une fiche bipolaire est disposée au côté femelle de l'unité d'appareils (2, 5) composée du dispositif d'alimentation en courant (3) et du membre intermédiaire (2) qui forment l'unité d'appareils connectable à engrenage et entre les chevilles de la fiche plate et en ce que la fiche de voiture (5), le cas échéant à couvrir d'un capuchon, est disposée au côté de l'unité d'appareils (2, 3).

Fig. 1

# Fig. 3

# Fig. 2

F I G. 4

F I G. 5